# EUROPEAN PATENT SPECIFICATION

(11) **EP 3 562 599 B1**
(45) Date of publication and mention of the grant of the patent: **21.07.2021**
(21) Application number: 17828761.1
(22) Date of filing: 27.12.2017
(51) Int. Cl.: B03B 5/02, B03B 5/40, B29B 17/04, B29B 17/02, B29K 105/06, B03B 5/28, B29L 7/00

(54) **METHOD AND APPARATUS FOR WASHING PLASTICS MATERIALS**
VERFAHREN UND VORRICHTUNG ZUM WASCHEN VON KUNSTSTOFFEN
PROCÉDÉ ET APPAREIL DE LAVAGE DE MATÉRIAUX PLASTIQUES

(30) Priority: 28.12.2016 IT 201600131842
(43) Date of publication of application: 06.11.2019
(73) Proprietor: Previero N. S.r.l., 20851 Lissone (Monza Brianza) (IT)
(72) Inventor: PREVIERO, Flavio, 20851 Lissone (IT)
(74) Representative: Candito, Rocco
(86) International application number: PCT/EP2017/084646
(87) International publication number: WO 2018/122264

(56) References cited:
- EP-A1- 1 225 019
- EP-A2- 0 359 106
- CN-U- 202 826 148

## Description

### BACKGROUND OF THE INVENTION

This invention relates to a method and an apparatus for washing and separating plastics materials - coming from domestic and/or industrial waste that is milled or reduced into small pieces - from various types of contaminant. The plastics pieces to be processed can come, for example, from containers, bottles, films and other post-consumption objects, and once they have been decontaminated they are ready for reuse as regenerated material.

The contaminants to be eliminated can comprise earth, sand, gravel, various types of dirt, labels or elements of other material remaining adhering to plastics pieces.

### PRIOR ART

In the field of treatment to recover plastics materials, washing systems are known that provide one or more washing tanks or containers, inside which the material is made to transit with which the contaminant to be eliminated aggregates.

From IT1326462, an apparatus is known that is configured for continuous washing of recovery material previously reduced into pieces, which is subjected to successive washing steps in a plurality of reactors that are serially connected to one another, inside which washing water is made to flow continuously, and a given quantity of recovery material.

Other systems are disclosed in US 4.196.019, EP 0 094 282, US 4.073.661, EP 0 129 518, and EP0359106.

In particular, the object of US 4.196.019 is an apparatus for washing plastics material in pieces of small dimensions, in which the apparatus comprises an elongated tank, which is suitable for being filled up to a preset level with a washing bath, provided with a blade stirrer that extends horizontally just below the upper level of the washing bath, to generate a stirring state; the plastics pieces flow to a horizontal channel from which they are discharged by a rotating drum.

A similar apparatus is disclosed in US 4.073.661: the plastics material in pieces of small dimensions is inserted into a water bath of a washing tank comprising a horizontal stirrer; the pieces of plastics material that float in the tank are removed by being dragged by a screw conveyor, which is positioned partially above the washing bath and along an upwardly oriented discharge channel.

EP 0 094 282 discloses a recovery system comprising a plurality of washing tanks that are serially connected and communicate with one another by labyrinth passages, in which the single washing tanks are provided with normal blade stirrers; the pieces of plastics material that float in the water bath are pushed along a discharge channel by a plurality of rotors that are suitably spaced apart along a discharge channel, and extracted from the bath by a blade wheel.

None of the currently known systems, including those disclosed above, is able to solve a problem disclosed below.

In order to separate the contaminants from the plastics material, the different specific weight thereof is generally exploited. Pieces of plastics material with specific weight that is about the same or less than the washing water are in a floating condition, whereas the contaminants with a specific weight generally greater than that of the water should precipitate to the bottom of the containers or washing tanks.

Unfortunately, in practice, conditions occur that adversely affect this principle of selection by specific weight, greatly reducing the efficiency of the entire separating process.

More precisely, when recycling low-density materials, thus materials with a lower specific weight than that of the washing fluid, a significant volume of product is generated that has to be processed.

washing bath, to generate a stirring state; the plastics pieces flow to a horizontal channel from which they are discharged by a rotating drum.

A similar apparatus is disclosed in US 4.073.661: the plastics material in pieces of small dimensions is inserted into a water bath of a washing tank comprising a horizontal stirrer; the pieces of plastics material that float in the tank are removed by being dragged by a screw conveyor, which is positioned partially above the washing bath and along an upwardly oriented discharge channel.

EP 0 094 282 discloses a recovery system comprising a plurality of washing tanks that are serially connected and communicate with one another by labyrinth passages, in which the single washing tanks are provided with normal blade stirrers; the pieces of plastics material that float in the water bath are pushed along a discharge channel by a plurality of rotors that are suitably spaced apart along a discharge channel, and extracted from the bath by a blade wheel.

EP 0 359 106 discloses a method of cleaning and recycling polluted plastics. In a closed system, chips of plastic are first of all washed in a washing solution, and different types of plastic are then separated. Then, the chips to be recycled are dried in a downstream stage. The discharge of harmful fumes is avoided and the solvent is treated and returned to the cycle. This method does not lead to satisfactory results.

None of the currently known systems, including those disclosed above, is able to solve a problem disclosed below.

In order to separate the contaminants from the plastics material, the different specific weight thereof is generally exploited. Pieces of plastics material with specific weight that is about the same or less than the washing water are in a floating condition, whereas the contaminants with a specific weight generally greater than that of the water should precipitate to the bottom of the containers or washing tanks.

Unfortunately, in practice, conditions occur that adversely affect this principle of selection by specific weight, greatly reducing the efficiency of the entire separating process.

More precisely, when recycling low-density materials, thus materials with a lower specific weight than that of the washing fluid, a significant volume of product is generated that has to be processed.

In the separating tank, agglomerates of plastics material tend to be generated that act as "rafts" of floating material that affect the separating quality of the heavy materials. Basically, such floating agglomerates, in addition to not allowing thorough washing of the individual pieces of plastics, act as a support for the aggregated contaminants, preventing the precipitation thereof downwards.

Simply adopting blades that are suitable for pushing the material below the water surface to promote sinking of the heavy contaminants is not sufficient inasmuch the agglomerates tend to remain cohesive and compact.

As the commercial value of the recovery material is closely connected to the degree of cleanliness and purity thereof, is thus linked to the percentage of residual contaminants that remain at the end of washing, the great need to overcome the problem disclosed above and thus to obtain a more efficient washing and separating process is evident.

### OBJECTS OF THE INVENTION

One object of the invention is to improve current washing systems for plastics materials.

Another object of the invention is to provide a solution that, in addition to being constructionally and functionally simpler, enables higher levels of purity and decontamination of plastics materials to be achieved.

In particular, one object of the invention is to provide a solution that is able to solve the problem of floating agglomerates of plastics material that prevent thorough washing of the pieces and complete precipitation of the heavier contaminants.

### SHORT DESCRIPTION OF THE INVENTION

These and further objects and advantages are achievable by a method according to claim 1, and an apparatus according to claim 10.

In particular, owing to the conveying unit comprising disaggregating-propelling means, which in one embodiment comprises screw conveying means, the problem of floating agglomerates of plastics material is solved.

The agglomerates of plastics are subjected, by the screw conveying means, to an intense disaggregating, opening and singling action, and are forced to descend deep down the tank.

The agglomerates are projected forcibly downwards in the fluid inside the separating tank to be effectively separated from the contaminants. The single parts of plastics material can have an enormous increase in volume that advantageously leads to having greater separation from the contaminants. With the same volume of water used, it is possible to process greater quantities of plastics, with clear economic advantages and a reduction of the environmental impact that arises therefrom.

The action performed by the conveying unit greatly reduces the influence of the phenomenon of undesired floating caused by the microbubbles that adhere to the surfaces of the particles and which in general is normally addressed by chemical additives.

Owing to the drawing and recirculating means that in particular comprises a variable flowrate pump, from the bottom of the tank a recirculation flow is drawn that contributes to regulating the separating efficiency of the material with density that is also very near that of the washing fluid used.

Further, the screen unit enables the contaminants to be retained that are pumped by removing means and the washing water to be recirculated in the separating tank, thus reducing the consumption of process water, and simplifying the system significantly.

### SHORT DESCRIPTION OF THE DRAWINGS

These and further features and advantages of the method and of the washing and separating apparatus will be clearer from the following description, with reference to the drawings, in which:

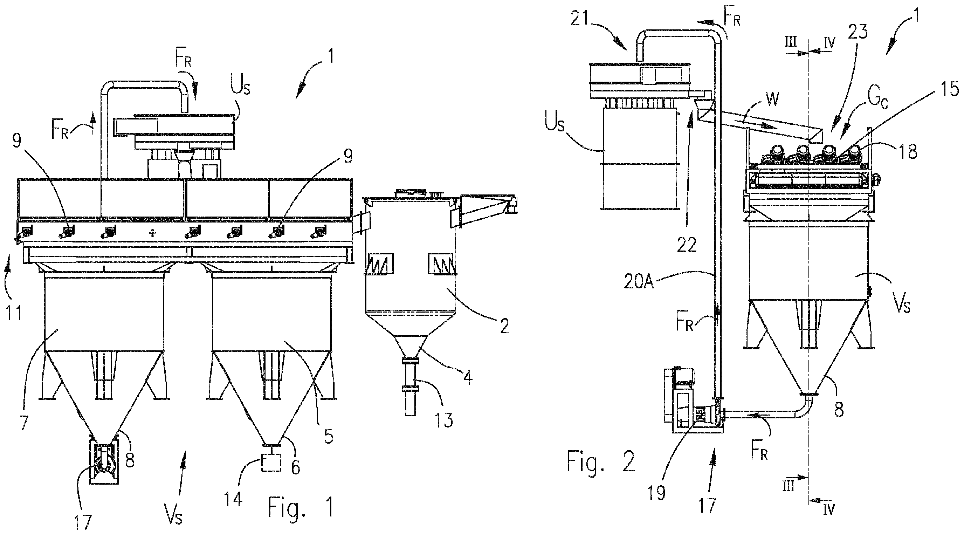

Figures 1 and 2 are two different views of a washing and separating apparatus according to the present invention;

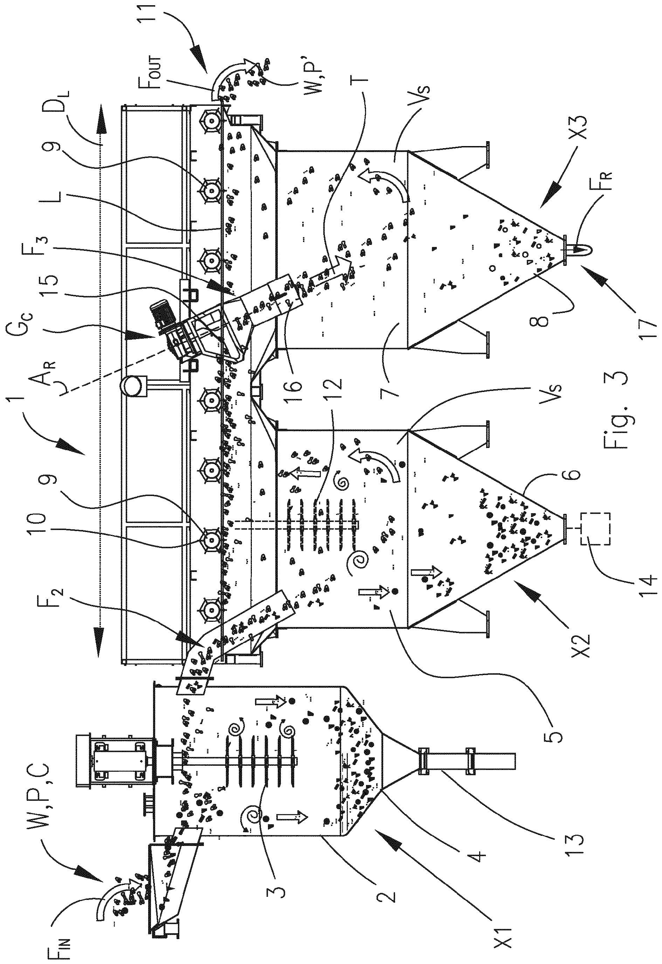

Figure 3 is a longitudinal section according to line III- III of figure 2;

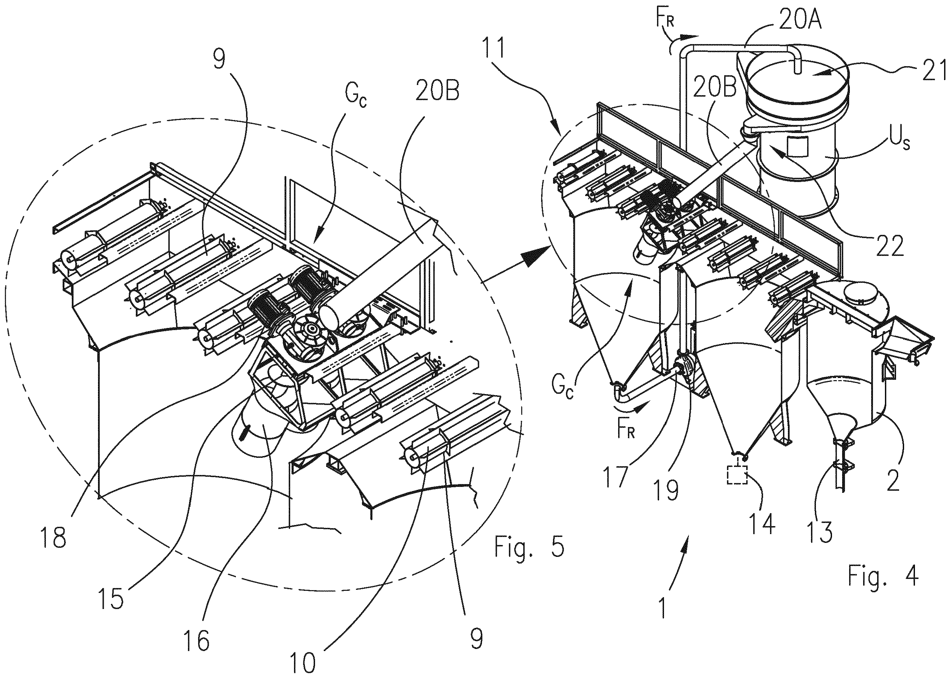

Figure 4 is another longitudinal section, in a perspective view, according to line IV- IV of figure 2;
Figure 5 shows an enlarged detail of figure 4;

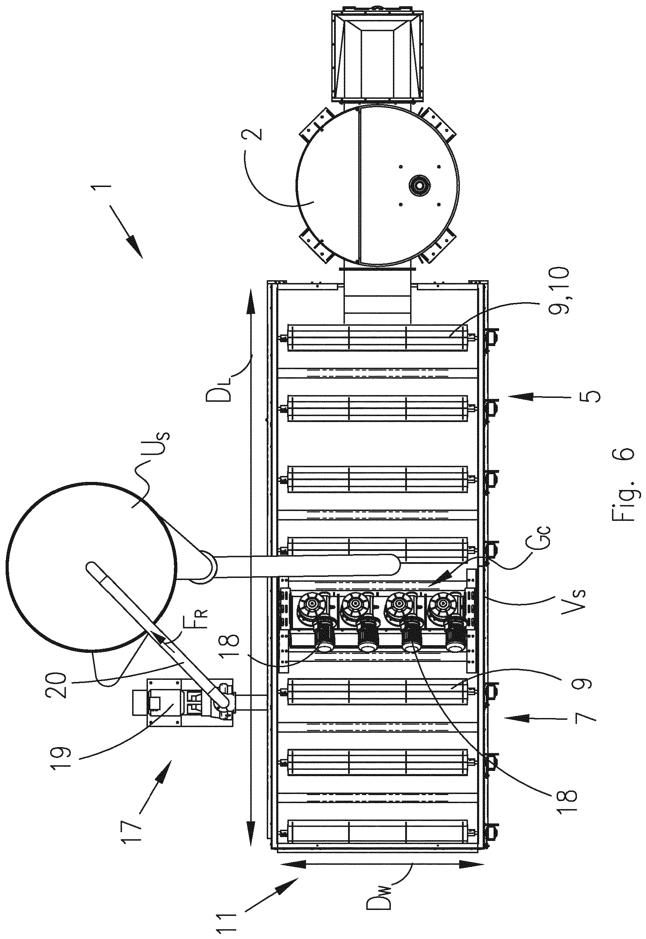

Figure 6 is a top view of the apparatus according to the invention;
Figure 7 is a block flow diagram relating to the washing and separating method according to the invention.

### DETAILED DESCRIPTION OF THE INVENTION

With reference to the attached figures, an apparatus 1 is disclosed below for washing a plastics material P and separating therefrom contaminating substances C.

The apparatus 1 comprises a washing container 2, provided with stirrer means 3, and suitable for receiving a first flow F_{IN} of a washing fluid W together with the plastics material P containing the contaminants C to be subjected to a first action of separating.

The stirrer means 3 is configured for generating a turbulent stirring action to detach from the plastics material P, by mechanical action, the part of contaminating material C adhering thereto.

The washing container 2 is bounded below by a first bottom portion 4 suitable for receiving a first fraction X1 of the heavier contaminants C.

The washing container 2 is provided below with a removing device 13 of valve or pump type acting to remove periodically the first fraction X1 of the contaminants C that settles on the first bottom portion 4.

The apparatus 1 comprises, downstream of the washing container 2, a separating tank V_{S} comprising a first chamber 5 and a second chamber 7 placed in succession one after the other.

The first chamber 5 is shaped for receiving by overflowing a second flow F2 of washing fluid W with floating plastics material P coming from the washing container 2 to be subjected to a second separating action.

The first chamber 5 can be provided internally with further stirrer means 12 arranged for generating a turbulent action for detaching mechanically possible further contaminants C adhering to the pieces of plastics material P.

The first separating chamber 5 comprises below a second bottom portion 6 suitable for receiving a second fraction X2 of precipitating contaminants C.

The first separating chamber 5 can be provided with a respective removing device 14 of valve or pump type suitable for drawing periodically the second fraction X2 of contaminants C from the aforesaid second bottom portion 6.

The second chamber 7 is shaped for receiving a third flow F3 of washing fluid W with floating plastics material P coming from the first chamber 5, to be subjected to a third separating action.

On the second chamber 7 an outlet port 11 is obtained through which an outgoing flow F_{OUT} of washing fluid W with processed plastics material P' is evacuated by overflowing.

The apparatus 1 is provided with rotating means 9 configured for facilitating the advancement of the plastics material P in a floating condition from the first chamber 5 to the second chamber 7 and from the second chamber 7 to the outlet port 11.

The rotating means in particular comprises a plurality of roller or drum elements 9 with a horizontal axis, arranged transversely to the advancement path of the floating plastics material P.

The roller elements 9 are distributed evenly along the longitudinal dimension D_{L} of the separating tank V_{S}.

The roller elements 9 comprise a plurality of baffles 10 that, in rotation, penetrates slightly below the free surface L to push the floating plastics material P along the advancement path.

The apparatus 1 is provided with a conveying unit G_{C} arranged for advancing the third flow F3 from the first chamber 5 to the second chamber 7.

The conveying unit G_{C} comprises disaggregating-propelling means 15 configured for disaggregating the floating agglomerates of plastics material P and for pushing the third flow F3 by force downwards inside the second chamber 7 to separate further a third fraction X3 of the contaminants C from the plastics material P.

The disaggregating-propelling means, more precisely, comprises a plurality of screw conveying units 15 that are rotatable around rotation axes A_{R} that are tilted with respect to an axis that is vertical and drivable by respective motors 18.

The screw conveying units 15 are contained in respective conduits 16 that protrude inside the second chamber 7.

The screw conveying units 15 and the respective conduits 16 are distributed along an entire width dimension D_{W} of the separating tank V_{S}, so as to define, astride the first chamber 5 and the second chamber 7, an obligatory transit front for the third flow F3 of water and plastics material P.

The apparatus 1 comprises drawing and recirculating means 17 suitable for drawing, below the separating tank V_{S}, a recirculation flow F_{R} comprising washing fluid W and precipitated contaminants C, and a screen unit U_{S} suitable for receiving the aforesaid recirculation flow F_{R} to retain the contaminants C thereof and return the washing fluid W to the separating tank V_{S}.

The drawing and recirculating means 17 comprises a variable flowrate pump 19 and a recirculation circuit 20 that extends from a bottom zone of the separating tank V_{S} to an upstream zone 21 placed above the screen unit U_{S}, and from a downstream zone 22 of the screen unit U_{S} to a summit zone 23 placed above the separating tank V_{S}.

In particular, the recirculation circuit 20 comprises a first conduit 20A that extends from the third bottom portion 8 to the upstream zone 21, and a return conduit 20B that protrudes from the downstream zone 22 of the screen unit Us to the aforesaid summit zone 23.

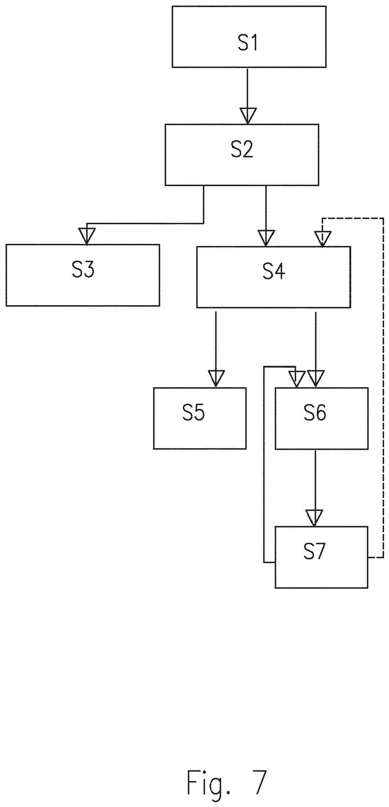

With the help of the block diagram of figure 7, the washing and separating method according to the invention is disclosed, which is actuated by the apparatus 1 that has just been disclosed.

The plastics material P coming from pre-washing and milling of post-consumption plastics waste, which waste is reduced into small pieces (dimensions from a few mm to a few cm) and containing contaminants C, is loaded together with an incoming flow F_{IN} of washing fluid W, such as water with possible additives, inside the washing container 2 (block S1).

Inside the container 2 there is a first separation (block S2), with precipitation of a first fraction X1 of the contaminants C onto the first bottom portion 4 and transfer of a second flow F2 of water W with plastics material to the first separating chamber 5 (block S4).

The first fraction X1 of the contaminants C deposited on the first bottom portion 4 is evacuated periodically by the removing device 13 of valve or pump type (block S3).

During the process, the roller or drum elements 9 are driven, at a rotation speed that is suitable for advancing the plastics material P, maintaining the plastics material P inside the washing container 2 and inside the separating tank VS for the time that is necessary to obtain the desired degree of purity and decontamination.

The incoming F_{IN} and outgoing F_{OUT} flows are adjusted according to the required degree of "refresh" for the washing fluid W.

The right degree of "refresh" is determined by taking account of both the degree of purity and decontamination aimed for and the specific economy needs to be met.

The speed of the roller or drum elements 9 can be adjusted according to the incoming/outgoing fluid flowrates and the degree of purity that it is desired to obtain for the processed plastics material P.

In the case of operation with a high degree of change of the washing fluid W, thus with high inlet and outlet flowrates and strong overflow effect, the roller elements 9 act to slow the flow of outgoing plastics material with respect to the outgoing flow of fluid W, contrasting the dragging hydrodynamic action of the fluid and gradually enabling the plastics material P to advance from one chamber to the next chamber to the outlet port 11.

In the case of operation with reduced inlet and outlet flowrates of the fluid W, and thus less overflow and dragging effect, the roller elements 9 perform a dragging effect that helps the plastics material to advance to the outlet port 11.

Inside the first chamber 5, a second fraction X2 of the contaminants precipitates that can be periodically eliminated by the removing device 13 of valve or pump type (block S5).

The plastics material P washed further is transferred (block S6) from the first chamber 5 to the second chamber 6 by the conveying unit Gc disclosed above. The screw conveying units 15, which is rotatable at rotation speeds that are settable from about 100 rpm to about 150 rpm, on the basis of specific process needs and of the features of the material to be processed, act to break up the floating agglomerates of plastics material that inevitably tend to form during the process.

The blocks of floating plastics material are vigorously disaggregated and opened up, and are propelled with force to a depth in the second chamber 7, facilitating the depositing of the contaminants C on the bottom whereas the plastics material with a lesser specific weight rise to the surface to be then evacuated by overflowing from the outlet port 11.

The agglomerates of floating plastics material, owing to the intense action of the screw conveying units 15, are reduced into single pieces (so-called "flakes" or "chips") which can benefit from a larger contact surface with the washing fluid, with advantages from the point of view of the degree of cleanliness that is achievable. Naturally, this enables greater quantities of plastics material P to be processed with the same quantity of water used, or vice versa, it is possible to reduce the quantity of water necessary for processing appropriately a certain volume of plastics material P. In all cases, the resulting economic advantage is evident.

The block S7 shows the washing fluid W drawing, filtering and recirculating step.

The variable flowrate pump 19 draws from the bottom of the separating tank (in this case from the third bottom portion 8 of the second separating chamber 7) the recirculating flow F_{R}, contributing to regulating the separating efficiency of the material with density that is also very near that of the washing fluid used.

The recirculating flow F_{R}, containing the third fraction X3 of the contaminants, is sent to the screen unit U_{S}, which is made to vibrate.

The screen unit U_{S} retains the contaminants C whereas the filtered fluid W is returned, by the return conduit 20B, inside the separating tank VS.

Owing to this configuration that ensures a constant elimination of the contaminants C from the washing bath, thus maintaining the quality of the washing fluid W high, the water consumption necessary for the washing process is reduced significantly.

From what has been disclosed and shown in the drawings, it is clear that the method and the washing and separating apparatus according to the invention achieve the set objects successfully.

The method and the apparatus disclosed above enable high levels of purity to be easily obtained in the recovery plastics material in reduced process time, owing to the immediate continuous removal of the contaminants C from the washing container 2 and from the chambers 5 and 7 of the separating tank V_{S}.

Owing to the fragmentation of the floating "rafts" of plastics material P performed by the screw conveying units 15, there is a significant increase in the efficacy of opening, washing and separation of the single pieces of plastics material P from the contaminants.

Propelling water and plastics material downwards promotes depositing of the contaminants C on the bottom of the tank V_{S}, whereas the pumping action of the pump 19, combined synergically with the filtering action of the screen unit U_{S}, ensures constant and continuous removal of the contaminants C, maintaining the washing bath in excellent operating conditions.

The objects are thus achieved of providing a solution that is functionally and constructively simple but is able to reduce general process costs and ensure great efficiency in separating contaminants from plastics materials to be recycled.

It is understood that what has been said and shown with reference to the attached drawings has been given merely by way of illustration of the general features of the method and of the washing and separating apparatus; thus other modifications or variations can be made to the method, to the entire apparatus, or parts thereof, whilst remaining within the context of the claims. In particular, the geometric conformation, dimensions, position and materials that make up one or several parts of the washing apparatus can be selected and/or optimized suitably on the basis of specific operating needs and materials to be processed.

## Claims

1. Method for washing a plastics material (P) and for separating contaminating substances (C) therefrom, comprising the steps of:
a. supplying a first flow (F_{IN}) of a washing fluid (W) together with the plastics material (P) containing the contaminants (C) in a washing container (2) in which stirrer means (3) is in movement to generate a turbulent stirring action intended to detach from the plastics material (P), through mechanical action, the part of contaminating material (C) adhering thereto, enabling a first fraction (X1) of heavier contaminants (C) to precipitate onto a first bottom portion (4) of said washing container (2), thus performing a first action of separating contaminants (C),
b. transferring by overflow a second flow (F₂) of washing fluid (W) with floating plastics material (P) from the washing container (2) to a first chamber (5) of a separating tank (V_{S}), in which a second separating action occurs with the precipitation of a second fraction (X2) of contaminants (C) to a second bottom portion (6) of said first chamber (5),
c. conveying a third flow (F₃) of washing fluid (W) with floating plastics material (P) from said first chamber (5) to a second chamber (7) of said separating tank (V_{S}) and evacuating by overflow an outgoing flow (Fout) of washing fluid (W) together with the processed plastics material (P'), in which in the transit from said first chamber (5) to said second chamber (7) there is provided
d. disaggregating the floating agglomerates of plastics material (P) and imparting to said third flow (F₃) and to the plastics material (P) a downward propelling action (T) inside said second chamber (7) to promote a third separating action with precipitation of a third fraction (X3) of contaminants (C) onto a third bottom portion (8) of said second chamber (7),
e. removing, from below said separating tank (V_{S}), a recirculation flow (F_{R}) comprising washing fluid (W) and precipitated contaminants (C) and sending said recirculation flow (F_{R}) to a separating screen unit (U_{S}) to retain said contaminants (C) and return the washing fluid (W) to said separating tank (Vs).

2. Method according to claim 1, wherein the advancement of the plastics material (P) in a floating condition is facilitated by horizontal axis rotating means (9), provided with baffles (10) placed near the free surface (L), which by rotating pushes the plastics material (P) from said first chamber (5) to said second chamber (7) and from said second chamber (7) to an outlet port (11) by overflowing.

3. Method according to claim 1 or 2, wherein inside said first chamber (5) of the separating tank (V_{S}), a further turbulent stirring step is provided by further stirrer means (12) to detach mechanically any further contaminants (C) adhering to the pieces of plastics material (P).

4. Method according to any preceding claim, wherein the floating agglomerates of plastics material (P) are disaggregated and are pushed together with washing fluid (W) to the inside of said second chamber (7) by rotating screw conveying means (15) having rotation axes (A_{R}) that are tilted with respect to a vertical axis, said screw conveyor means (15) being contained in respective conduits (16) that protrude inside said second chamber (7).

5. Method according to claim 4, wherein said screw conveyor means (15) and said conduits (16) are distributed along the entire width dimension (D_{W}) of said separating tank (V_{S}) to define, astride said first chamber (5) and said second chamber (7), an obligatory transit front for a third flow (F₃).

6. Method according to any preceding claim, wherein said recirculation flow (F_{R}) is pumped from the bottom of said separating tank (V_{S}) to be sent to said screen unit (U_{S}) which is vibrated to retain and remove said contaminants (C) and send the washing fluid (W) into said separating tank (V_{S}).

7. Method according to claim 6 wherein said recirculation flow (F_{R}) is removed from said third bottom portion (8) of said second chamber (7), and the washing fluid (W) filtered by said screen unit (U_{S}) is returned from above to said second chamber (7) or to said first chamber (5) of said separating tank (V_{S}).

8. Method according to any preceding claim, wherein, by a first removing device (13) of valve or pump type, said first fraction (X1) of contaminants (C) is periodically removed from said first bottom portion (4), and wherein said second fraction (X2) of contaminants (C) is periodically removed from said second bottom portion (6) by a second removing device (14) of valve or pump type.

9. Method according to any preceding claim, wherein said plastics material has a specific weight that is about the same as or less than the specific weight of said washing fluid (W).

10. Apparatus for washing a plastics material (P) and for separating contaminating substances (C) therefrom, comprising:
- a washing container (2) provided with stirrer means (3) and suitable for receiving a first flow (F_{IN}) of a washing fluid (W) together with the plastics material (P) containing the contaminants (C) to be subjected to a first separating action, said stirrer means (3) being configured for generating a turbulent stirring action to detach from the plastics material (P), through mechanical action, the part of contaminating material (C) adhering thereto, said washing container (2) being bounded below by a first bottom portion (4) that is suitable for receiving a first fraction (X1) of heavier contaminants (C),
- a separating tank (V_{S}) comprising a first chamber (5) and a second chamber (7) placed in succession,
- said first chamber (5) being shaped to receive by overflowing a second flow (F₂) of washing fluid (W) with floating plastics material (P) coming from said washing container (2) to be subjected to a second separating action, and comprising a second bottom portion (6) that is suitable for receiving a second fraction (X2) of contaminants (C),
- said second chamber (7) being shaped for receiving a third flow (F₃) of washing fluid (W) with floating plastics material (P), coming from said first chamber (5), to be subjected to a third separating action, and provided with an outlet port (11) to evacuate by overflowing an outgoing flow (F_{OUT}) of washing fluid (W) with processed plastics material (P'),
- a conveying unit (G_{C}) for said third flow (F₃), comprising disaggregating-propelling means (15) configured for disaggregating the floating agglomerates of plastics material (P) and for forcibly pushing, downwards inside said second chamber (7), said third flow (F₃) to separate further from the plastics material (P) a third fraction (X3) of contaminants (C),
- drawing and recirculating means (17) suitable for drawing from said separating tank (V_{S}), a recirculating flow (F_{R}) comprising washing fluid (W) and precipitated contaminants (C),
- a screen unit (U_{S}) that is suitable for receiving said recirculating flow (F_{R}) to retain the contaminants (C) and is configured for returning the washing fluid (W) to said separating tank (V_{S}).

11. Apparatus according to claim 10, wherein said disaggregating-propelling means comprises screw conveyor means (15) that is rotatable around rotation axes (A_{R}) that are tilted with respect to a vertical axis, said screw conveyor means (15) being contained in conduit means (16) that protrude inside said second chamber (7).

12. Apparatus according to claim 11, wherein said screw conveyor means comprises a plurality of screw conveyor units (15) drivable by motors (18) and contained in respective conduits (16), said screw conveyor units (15) and said respective conduits (16) being distributed along an entire width dimension (D_{W}) of said separating tank (V_{S}) to define, astride said first chamber (5) and said second chamber (7), an obligatory transit front for a third flow (F3).

13. Apparatus according to any one of claims 10 to 12, wherein said drawing and recirculation means (17) comprises a variable flowrate pump (19), and a recirculation circuit (20) that extends from a bottom zone of said separating tank (V_{S}) to an upstream zone (21) placed above said screen unit (U_{S}), and from a downstream zone (22) of said screen unit (U_{S}) to a summit zone (23) placed above said separating tank (V_{S}).

14. Apparatus according to claim 13, wherein said recirculation circuit (20) comprises a first conduit (20A) that extends from said third bottom portion (8) to said upstream zone (21), and a return conduit (20B) that protrudes from said downstream zone (22) of said screen unit (U_{S}) to said summit zone (23).

15. Apparatus according to any one of claims 10 to 14, further comprising rotatable means (9) having a horizontal axis, provided with baffles (10) placed near the free surface (L) and configured for facilitating the advancement of the plastics material (P) in a floating condition from said first chamber (5) to said second chamber (7) and from said second chamber (7) to an outlet port (11) by overflowing.

16. Apparatus according to claim 15, wherein said rotatable means comprise a plurality of roller or drum elements (9) arranged transversely to the advancement path of the floating plastics material (P), and distributed evenly along the longitudinal dimension (D_{L}) of said separating tank (V_{S}).

17. Apparatus according to any one of claims 10 to 16, wherein inside said first chamber (5) of the separating tank (V_{S}) there is provided further stirrer means (12) for generating a turbulent action to detach mechanically possible further contaminants (C) adhering to the pieces of plastics material (P).

18. Apparatus according to any one of claims 10 to 17, further comprising a first removing device (13) of valve or pump type placed under said first bottom portion (4) to remove periodically said first fraction (X1) of contaminants (C), and a second removing device (14) of valve or pump type, placed under said second bottom portion (6) to remove periodically said second fraction (X2) of contaminants (C).

## Patentansprüche

1. Verfahren zum Waschen eines Kunststoffmaterials (P) und zum Abtrennen von verunreinigenden Substanzen (C) daraus, umfassend die Schritte:
a. Zuführen eines ersten Stroms (F_{IN}) eines Waschfluids (W) zusammen mit dem Kunststoffmaterial (P), das die Verunreinigungen (C) enthält, in einen Waschbehälter (2), in dem ein Rührmittel (3) in Bewegung ist, um eine turbulente Rührwirkung zu erzeugen, um vom Kunststoffmaterial (P) durch mechanische Einwirkung den Teil des verunreinigenden, daran anhaftenden Materials (C) zu lösen, wobei eine erste Fraktion (X1) schwererer Verunreinigungen (C) auf einem ersten Bodenabschnitt (4) des Waschbehälters (2) ausgefällt werden kann, wodurch eine erste Wirkung zur Abtrennung der Verunreinigungen (C) durchgeführt wird,
b. Überführen eines zweiten Stroms (F₂) eines Waschfluids (W) mit schwimmendem Kunststoffmaterial (P) aus dem Waschbehälter (2) durch Überlauf in eine erste Kammer (5) eines Trennbehälters (V_{S}), in dem eine zweite Trennwirkung mit der Ausfällung einer zweiten Fraktion (X2) von Verunreinigungen (C) zu einem zweiten Bodenabschnitt (6) der ersten Kammer (5) stattfindet,
c. Befördern eines dritten Stroms (F₃) eines Waschfluids (W) mit schwimmendem Kunststoffmaterial (P) von der ersten Kammer (5) zu einer zweiten Kammer (7) des Trennbehälters (V_{S}) und Evakuieren eines abgehenden Stroms (F_{OUT}) des Waschfluids (W) zusammen mit dem verarbeiteten Kunststoffmaterial (P') durch Überlauf, wobei beim Übergang von der ersten Kammer (5) zu der zweiten Kammer (7) vorgesehen ist
d. Vereinzeln der schwimmenden Agglomerate von Kunststoffmaterial (P) und Verleihen dem dritten Strom (F₃) und dem Kunststoffmaterial (P) eine nach unten treibende Wirkung (T) innerhalb der zweiten Kammer (7), um eine dritte Trennwirkung mit Ausfällung einer dritten Fraktion (X3) von Verunreinigungen (C) auf einen dritten Bodenabschnitt (8) der zweiten Kammer (7) zu fördern,
e. Entfernen eines Rezirkulationsstroms (F_{R}), der Waschfluid (W) und ausgefällte Verunreinigungen (C) umfasst, von unterhalb des Trennbehälters (V_{S}) und Senden des Rezirkulationsstroms (F_{R}) zu einer Trennsiebeinheit (U_{S}), um die Verunreinigungen (C) zurückzuhalten und das Waschfluid (W) zu dem Trennbehälter (V_{S}) zurückzuführen.

2. Verfahren nach Anspruch 1, wobei das Vorwärtsbewegen des Kunststoffmaterials (P) in einem schwebenden Zustand durch ein Drehmittel (9) mit horizontaler Achse erleichtert wird, die mit Prallflächen (10) versehen ist, die nahe der freien Oberfläche (L) angeordnet sind, die durch Drehen das Kunststoffmaterial (P) durch Überlaufen von der ersten Kammer (5) in die zweite Kammer (7) und von der zweiten Kammer (7) zu einer Auslassöffnung (11) schiebt.

3. Verfahren nach Anspruch 1 oder 2, wobei innerhalb der ersten Kammer (5) des Trennbehälters (V_{S}) ein weiterer turbulenter Rührschritt durch ein weiteres Rührmittel (12) vorgesehen ist, um weitere Verunreinigungen (C), die an den Stücken des Kunststoffmaterials (P) anhaften, mechanisch abzulösen.

4. Verfahren nach einem vorstehenden Anspruch, wobei die schwimmenden Agglomerate von Kunststoffmaterial (P) vereinzelt werden und zusammen mit Waschfluid (W) in das Innere der zweiten Kammer (7) durch rotierende Schneckenfördermittel (15) mit Rotationsachsen (A_{R}), die in Bezug auf eine vertikale Achse geneigt sind, geschoben werden, wobei die Schneckenfördermittel (15) in entsprechenden Leitungen (16) enthalten sind, die in das Innere der zweiten Kammer (7) vorstehen.

5. Verfahren nach Anspruch 4, wobei die Schneckenfördermittel (15) und die Leitungen (16) entlang der gesamten Breitenabmessung (D_{W}) des Trennbehälters (V_{S}) verteilt sind, um gleichauf über die erste Kammer (5) und die zweite Kammer (7) eine zwingende Durchgangsfront für einen dritten Strom (F₃) zu definieren.

6. Verfahren nach einem vorstehenden Anspruch, wobei der Rezirkulationsstrom (F_{R}) vom Boden des Trennbehälters (V_{S}) gepumpt wird, um zu der Siebeinheit (U_{S}) geschickt zu werden, die in Schwingungen versetzt wird, um die Verunreinigungen (C) zurückzuhalten und zu entfernen und das Waschfluid (W) in den Trennbehälter (V_{S}) zu schicken.

7. Verfahren nach Anspruch 6, wobei der Rezirkulationsstrom (F_{R}) aus dem dritten Bodenabschnitt (8) der zweiten Kammer (7) entfernt wird und das durch die Siebeinheit (U_{S}) gefilterte Waschfluid (W) von oben in die zweite Kammer (7) oder in die erste Kammer (5) des Trennbehälters (V_{S}) zurückgeführt wird.

8. Verfahren nach einem vorstehenden Anspruch, wobei durch eine erste Entfernungsvorrichtung (13) vom Ventil- oder Pumpentyp die erste Fraktion (X1) von Verunreinigungen (C) periodisch von dem ersten Bodenabschnitt (4) entfernt wird, und wobei die zweite Fraktion (X2) von Verunreinigungen (C) periodisch von dem zweiten Bodenabschnitt (6) durch eine zweite Entfernungsvorrichtung (14) vom Ventil- oder Pumpentyp entfernt wird.

9. Verfahren nach einem vorstehenden Anspruch, wobei das Kunststoffmaterial ein spezifisches Gewicht aufweist, das etwa gleich oder kleiner als das spezifische Gewicht des Waschfluids (W) ist.

10. Vorrichtung zum Waschen eines Kunststoffmaterials (P) und zum Abtrennen verunreinigender Substanzen (C) daraus, umfassend:
- einen Waschbehälter (2), der mit einem Rührmittel (3) versehen ist und geeignet ist, einen ersten Strom (F_{IN}) eines Waschfluids (W) zusammen mit dem Kunststoffmaterial (P) aufzunehmen, das die Verunreinigungen (C) enthält, die einer ersten Trennwirkung unterzogen werden sollen, wobei das Rührmittel (3) so konfiguriert ist, dass sie eine turbulente Rührwirkung erzeugt, um durch mechanische Einwirkung den Teil des daran haftenden, verunreinigenden Materials (C) von dem Kunststoffmaterial (P) zu lösen, wobei der Waschbehälter (2) unten durch einen ersten Bodenabschnitt (4) begrenzt ist, der zur Aufnahme einer ersten Fraktion (X1) schwererer Verunreinigungen (C) geeignet ist,
- einen Trennbehälter (V_{S}), umfassend eine erste Kammer (5) und eine zweite Kammer (7), die nacheinander angeordnet sind,
- wobei die erste Kammer (5) so geformt ist, dass sie durch Überströmen einen zweiten Strom (F₂) von Waschfluid (W) mit schwimmendem Kunststoffmaterial (P) aufnimmt, der aus dem Waschbehälter (2) kommt, um einer zweiten Trennwirkung unterzogen zu werden, und einen zweiten Bodenabschnitt (6) umfasst, der geeignet ist, eine zweite Fraktion (X2) von Verunreinigungen (C) aufzunehmen,
- wobei die zweite Kammer (7) so geformt ist, dass sie einen dritten Strom (F₃) eines Waschfluids (W) mit schwimmendem Kunststoffmaterial (P) aufnimmt, der aus der ersten Kammer (5) kommt, um einer dritten Trennwirkung unterzogen zu werden, und mit einer Auslassöffnung (11) versehen ist, um einen abgehenden Strom (F_{OUT}) von Waschfluid (W) mit verarbeitetem Kunststoffmaterial (P') durch Überströmen zu evakuieren,
- eine Fördereinheit (G_{C}) für den dritten Strom (F₃), umfassend eine Vereinzelungs-Antriebseinrichtung (15), die so konfiguriert ist, dass sie die schwimmenden Agglomerate von Kunststoffmaterial (P) vereinzelt und innerhalb der zweiten Kammer (7) den dritten Strom (F₃) zwangsweise nach unten schiebt, um eine dritte Fraktion (X3) von Verunreinigungen (C) weiter von dem Kunststoffmaterial (P) abzutrennen,
- Abzieh- und Rezirkulationsmittel (17), die geeignet sind, aus dem Trennbehälter (V_{S}) einen Rezirkulationsstrom (F_{R}) abzuziehen, der Waschfluid (W) und ausgefällte Verunreinigungen (C) umfasst,
- eine Siebeinheit (U_{S}), die geeignet ist, den Rezirkulationsstrom (F_{R}) aufzunehmen, um die Verunreinigungen (C) zurückzuhalten, und die so konfiguriert ist, dass sie das Waschfluid (W) in den Trennbehälter (V_{S}) zurückführt.

11. Vorrichtung nach Anspruch 10, wobei die Vereinzelungs-Antriebseinrichtung ein Schneckenfördermittel (15) umfasst, die um Rotationsachsen (A_{R}) drehbar ist, die in Bezug auf eine vertikale Achse geneigt sind, wobei die Schneckenfördermittel (15) in einem Leitungsmittel (16) enthalten ist, die in das Innere der zweiten Kammer (7) vorsteht.

12. Vorrichtung nach Anspruch 11, wobei das Schneckenfördermittel eine Vielzahl von Schneckenfördereinheiten (15) umfasst, die durch Motoren (18) angetrieben werden können und in entsprechenden Leitungen (16) enthalten sind, wobei die Schneckenfördereinheiten (15) und die entsprechenden Leitungen (16) entlang einer gesamten Breitenabmessung (D_{W}) des Trennbehälters (V_{S}) verteilt sind, um gleichauf über die erste Kammer (5) und die zweite Kammer (7) eine zwingende Durchgangsfront für einen dritten Strom (F3) zu definieren.

13. Vorrichtung nach einem der Ansprüche 10 bis 12, wobei das Abzieh- und Rezirkulationsmittel (17) eine Pumpe (19) mit variabler Durchflussmenge und einen Rezirkulationskreislauf (20) umfasst, der sich von einer unteren Zone des Trennbehälters (V_{S}) zu einer stromaufwärts gelegenen Zone (21), die oberhalb der Siebeinheit (U_{S}) angeordnet ist, und von einer stromabwärts gelegenen Zone (22) der Siebeinheit (U_{S}) zu einer Gipfelzone (23), die oberhalb des Trennbehälters (V_{S}) angeordnet ist, erstreckt.

14. Vorrichtung nach Anspruch 13, wobei der Rezirkulationskreislauf (20) eine erste Leitung (20A), die sich von dem dritten Bodenabschnitt (8) zu der stromaufwärts gelegenen Zone (21) erstreckt, und eine Rückführleitung (20B), die von der stromabwärts gelegenen Zone (22) der Siebeinheit (U_{S}) zu der Gipfelzone (23) vorsteht, umfasst.

15. Vorrichtung nach einem der Ansprüche 10 bis 14, weiter umfassend drehbare Mittel (9) mit horizontaler Achse, die mit Prallblechen (10) versehen sind, die nahe der freien Oberfläche (L) angeordnet und so konfiguriert sind, dass sie das Vorwärtsbewegen des Kunststoffmaterials (P) in einem schwebenden Zustand von der ersten Kammer (5) zu der zweiten Kammer (7) und von der zweiten Kammer (7) zu einer Auslassöffnung (11) durch Überlaufen erleichtern.

16. Vorrichtung nach Anspruch 15, wobei die drehbaren Mittel eine Vielzahl von Rollen- oder Trommelelementen (9) umfassen, die quer zum Vorschubweg des schwimmenden Kunststoffmaterials (P) angeordnet und gleichmäßig entlang der Längsabmessung (D_{L}) des Trennbehälters (V_{S}) verteilt sind.

17. Vorrichtung nach einem der Ansprüche 10 bis 16, wobei innerhalb der ersten Kammer (5) des Trennbehälters (V_{S}) ein weiteres Rührmittel (12) zur Erzeugung einer turbulenten Wirkung vorgesehen ist, um mechanisch mögliche weitere Verunreinigungen (C), die an den Stücken des Kunststoffmaterials (P) anhaften, abzulösen.

18. Vorrichtung nach einem der Ansprüche 10 bis 17, weiter umfassend eine erste Entfernungsvorrichtung (13) vom Ventil- oder Pumpentyp, die unter dem ersten Bodenabschnitt (4) angeordnet ist, um periodisch die erste Fraktion (X1) von Verunreinigungen (C) zu entfernen, und eine zweite Entfernungsvorrichtung (14) vom Ventil- oder Pumpentyp, die unter dem zweiten Bodenabschnitt (6) angeordnet ist, um periodisch die zweite Fraktion (X2) von Verunreinigungen (C) zu entfernen.

## Revendications

1. Procédé de lavage d'un matériau plastique (P) et de séparation de substances contaminantes (C) de celui-ci, comprenant les étapes de :
a. l'alimentation d'un premier flux (F_{IN}) d'un fluide de lavage (W) conjointement avec le matériau plastique (P) contenant les contaminants (C) dans un récipient de lavage (2) dans lequel un moyen agitateur (3) est en mouvement pour générer une action d'agitation turbulente destinée à détacher du matériau plastique (P), à travers l'action mécanique, la partie de matériau contaminant (C) adhérant à celui-ci, permettant à une première fraction (X1) de contaminants plus lourds (C) de se précipiter sur une première portion inférieure (4) dudit récipient de lavage (2), réalisant ainsi une première action de séparation de contaminants (C),
b. le transfert par débordement d'un deuxième flux (F₂) de fluide de lavage (W) avec du matériau plastique flottant (P) du récipient de lavage (2) à une première chambre (5) d'un réservoir de séparation (V_{S}) dans lequel une deuxième action de séparation se produit avec la précipitation d'une deuxième fraction (X2) de contaminants (C) à une seconde portion inférieure (6) de ladite première chambre (5),
c. le transport d'un troisième flux (F₃) de fluide de lavage (W) avec du matériau plastique flottant (P) de ladite première chambre (5) à une seconde chambre (7) dudit réservoir de séparation (V_{S}) et l'évacuation par débordement d'un flux sortant (Fout) de fluide de lavage (W) conjointement avec le matériau plastique traité (P'), dans lequel dans le passage de ladite première chambre (5) à ladite seconde chambre (7) il est prévu,
d. la désagrégation des agglomérats flottants de matériau plastique (P) et la transmission audit troisième flux (F₃) et au matériau plastique (P) d'une action de propulsion vers le bas (T) à l'intérieur de ladite seconde chambre (7) pour faciliter une troisième action de séparation avec la précipitation d'une troisième fraction (X3) de contaminants (C) sur une troisième portion inférieure (8) de ladite seconde chambre (7),
e. le retrait, de sous ledit réservoir de séparation (V_{S}) d'un flux de recirculation (F_{R}) comprenant du fluide de lavage (W) et des contaminants précipités (C) et l'envoi dudit flux de recirculation (F_{R}) à une unité d'écran de séparation (U_{S}) pour retenir lesdits contaminants (C) et retourner le fluide de lavage (W) audit réservoir de séparation (V_{S}).

2. Procédé selon la revendication 1, dans lequel l'avancement du matériau plastique (P) dans une condition flottante est facilité par un moyen de rotation d'axe horizontal (9), doté de déflecteurs (10) placés près de la surface libre (L), qui pousse par rotation le matériau plastique (P) de ladite première chambre (5) à ladite seconde chambre (7) et de ladite seconde chambre (7) à un orifice de sortie (11) par débordement.

3. Procédé selon la revendication 1 ou 2, dans lequel à l'intérieur de ladite première chambre (5) du réservoir de séparation (V_{S}), une autre étape d'agitation turbulente est fournie par un autre moyen agitateur (12) pour détacher mécaniquement tout autre contaminant (C) adhérant aux pièces de matériau plastique (P).

4. Procédé selon l'une quelconque des revendications précédentes, dans lequel les agglomérats flottants de matériau plastique (P) sont désagrégés et sont poussés conjointement avec le fluide de lavage (W) à l'intérieur de ladite seconde chambre (7) par rotation de moyens de transport à vis (15) présentant des axes de rotation (A_{R}) qui sont inclinés par rapport à un axe vertical, lesdits moyens de transport à vis (15) étant contenus dans des conduits respectifs (16) qui font saillie à l'intérieur de ladite seconde chambre (7).

5. Procédé selon la revendication 4, dans lequel lesdits moyens de transport à vis (15) et lesdits conduits (16) sont distribués le long de la dimension de largeur entière (D_{W}) dudit réservoir de séparation (V_{S}) pour définir, à califourchon de ladite première chambre (5) et de ladite seconde chambre (7), un avant de passage obligatoire pour un troisième flux (F₃).

6. Procédé selon l'une quelconque des revendications précédentes, dans lequel ledit flux de recirculation (F_{R}) est pompé depuis le fond dudit réservoir de séparation (V_{S}) pour être envoyé à ladite unité d'écran (U_{S}) qui est en vibration pour retenir et retirer lesdits contaminants (C) et envoyer le fluide de lavage (W) dans ledit réservoir de séparation (V_{S}).

7. Procédé selon la revendication 6, dans lequel ledit flux de recirculation (F_{R}) est retiré de ladite troisième portion inférieure (8) de ladite seconde chambre (7), et le fluide de lavage (W) filtré par ladite unité d'écran (U_{S}) est retourné du dessus à ladite seconde chambre (7) ou à ladite première chambre (5) dudit réservoir de séparation (V_{S}).

8. Procédé selon l'une quelconque des revendications précédentes, dans lequel, par un premier dispositif de retrait (13) du type valve ou pompe, ladite première fraction (X1) de contaminants (C) est périodiquement retirée de ladite première portion inférieure (4), et dans lequel ladite deuxième fraction (X2) de contaminants (C) est périodiquement retirée de ladite seconde portion inférieure (6) par un second dispositif de retrait (14) du type valve ou pompe.

9. Procédé selon l'une quelconque des revendications précédentes, dans lequel ledit matériau plastique présente un poids spécifique qui est environ le même que ou inférieur au poids spécifique dudit fluide de lavage (W).

10. Appareil de lavage d'un matériau plastique (P) et de séparation de substances contaminantes (C) de celui-ci, comprenant :
- un récipient de lavage (2) doté d'un moyen agitateur (3) et adapté pour recevoir un premier flux (F_{IN}) d'un fluide de lavage (W) conjointement avec le matériau plastique (P) contenant les contaminants (C) à soumettre à une première action de séparation, ledit moyen agitateur (3) étant configuré pour générer une action d'agitation turbulente pour détacher du matériau plastique (P), à travers une action mécanique, la partie de matériau contaminant (C) adhérant à celui-ci, ledit récipient de lavage (2) étant lié dessous par une première portion inférieure (4) qui est adaptée pour recevoir une première fraction (X1) de contaminants plus lourds (C),
- un réservoir de séparation (V_{S}) comprenant une première chambre (5) et une seconde chambre (7) placées successivement,
- ladite première chambre (5) étant formée pour recevoir par débordement un deuxième flux (F₂) de fluide de lavage (W) avec du matériau plastique flottant (P) entrant depuis ledit récipient de lavage (2) à soumettre à une deuxième action de séparation, et comprenant une seconde portion inférieure (6) qui est adaptée pour recevoir une deuxième fraction (X2) de contaminants (C),
- ladite seconde chambre (7) étant formée pour recevoir un troisième flux (F₃) de fluide de lavage (W) avec du matériau plastique flottant (P), venant de ladite première chambre (5), à soumettre à une troisième action de séparation, et dotée d'un orifice de sortie (11) pour évacuer par débordement un flux sortant (F_{OUT}) de fluide de lavage (W) avec du matériau plastique traité (P'),
- une unité de transport (G_{C}) pour ledit troisième flux (F₃), comprenant un moyen de propulsion et de désagrégation (15) configuré pour la désagrégation des agglomérats flottants de matériau plastique (P) et pour pousser à force, vers le bas à l'intérieur de ladite seconde chambre (7), ledit troisième flux (F₃) pour séparer davantage du matériau plastique (P) une troisième fraction (X3) de contaminants (C),
- un moyen de retrait et de recirculation (17) adapté pour retirer dudit réservoir de séparation (V_{S}), un flux de recirculation (F_{R}) comprenant du fluide de lavage (W) et des contaminants précipités (C),
- une unité d'écran (U_{S}) qui est adaptée pour recevoir ledit flux de recirculation (F_{R}) pour retenir les contaminants (C) et est configurée pour retourner le fluide de lavage (W) audit réservoir de séparation (V_{S}).

11. Appareil selon la revendication 10, dans lequel ledit moyen de propulsion et de désagrégation comprend un moyen de transport à vis (15) qui est rotatif autour d'axes de rotation (A_{R}) qui sont inclinés par rapport à un axe vertical, ledit moyen de transport à vis (15) étant contenu dans des moyens de conduit (16) qui font saillie à l'intérieur de ladite seconde chambre (7).

12. Appareil selon la revendication 11, dans lequel ledit moyen de transport à vis comprend une pluralité d'unités de transport à vis (15) entraînables par des moteurs (18) et contenues dans des conduits respectifs (16), lesdites unités de transport à vis (15) et lesdits conduits respectifs (16) étant distribués le long d'une dimension de largeur entière (D_{W}) dudit réservoir de séparation (V_{S}) pour définir, à califourchon de ladite première chambre (5) et de ladite seconde chambre (7), un avant de passage obligatoire pour un troisième flux (F3).

13. Appareil selon l'une quelconque des revendications 10 à 12, dans lequel ledit moyen de retrait et de recirculation (17) comprend une pompe à débit variable (19), et un circuit de recirculation (20) qui s'étend depuis une zone inférieure dudit réservoir de séparation (V_{S}) à une zone amont (21) placée au-dessus de ladite unité d'écran (U_{S}), et depuis une zone aval (22) de ladite unité d'écran (U_{S}) à une zone de sommet (23) placée au-dessus dudit réservoir de séparation (V_{S}).

14. Appareil selon la revendication 13, dans lequel ledit circuit de recirculation (20) comprend un premier conduit (20A) qui s'étend depuis ladite troisième portion inférieure (8) à ladite zone amont (21), et un conduit de retour (20B) qui fait saillie de ladite zone aval (22) de ladite unité d'écran (U_{S}) à ladite zone de sommet (23).

15. Appareil selon l'une quelconque des revendications 10 à 14, comprenant en outre des moyens rotatifs (9) présentant un axe horizontal, dotés de déflecteurs (10) placés près de la surface libre (L) et configurés pour faciliter l'avancement du matériau plastique (P) dans une condition flottante de ladite première chambre (5) à ladite seconde chambre (7) et de ladite seconde chambre (7) à un orifice de sortie (11) par débordement.

16. Appareil selon la revendication 15, dans lequel lesdits moyens rotatifs comprennent une pluralité d'éléments de rouleau ou tambour (9) agencés transversalement au trajet d'avancement du matériau plastique flottant (P), et distribués uniformément le long de la dimension longitudinale (D_{L}) dudit réservoir de séparation (V_{S}).

17. Appareil selon l'une quelconque des revendications 10 à 16, dans lequel à l'intérieur de ladite première chambre (5) du réservoir de séparation (V_{S}) il est prévu d'autres moyens agitateurs (12) pour générer une action turbulente pour détacher mécaniquement de possibles autres contaminants (C) adhérant aux pièces de matériau plastique (P).

18. Appareil selon l'une quelconque des revendications 10 à 17, comprenant en outre un premier dispositif de retrait (13) du type valve ou pompe placé sous ladite première portion inférieure (4) pour retirer périodiquement ladite première fraction (X1) de contaminants (C), et un second dispositif de retrait (14) du type valve ou pompe, placé sous ladite seconde portion inférieure (6) pour retirer périodiquement ladite deuxième fraction (X2) de contaminants (C).
